# EUROPÄISCHE PATENTSCHRIFT

(11) **EP 2 702 866 B1**
(45) Veröffentlichungstag und Bekanntmachung des Hinweises auf die Patenterteilung: **18.07.2018**
(21) Anmeldenummer: 13178463.9
(22) Anmeldetag: 30.07.2013
(51) Int. Cl.: A01K 1/00, A01K 31/00, A01K 31/22, A01K 1/03

(54) **Mobiler Tierstall**
Mobile animal stall
Ecurie mobile

(30) Priorität: 29.08.2012 DE 202012103284 U; 05.11.2012 DE 202012104233 U
(43) Veröffentlichungstag der Anmeldung: 05.03.2014
(73) Patentinhaber: Wördekemper, Andreas, 33397 Rietberg (DE)
(72) Erfinder: Wördekemper, Andreas, 33397 Rietberg (DE)
(74) Vertreter: Wickord, Wiro

(56) Entgegenhaltungen:
- DE-U1-202012 101 514
- GB-A- 2 217 567
- US-A- 3 009 211

## Beschreibung

Die Erfindung bezieht sich auf einen Mobilstall, insbesondere zur Unterbringung von Geflügel, Kälber oder Schweinen, der auf einer Freifläche bewegt werden kann und der einen Grundrahmen, darauf stehende Wände und ein Dach besitzt.

Für Legehennen bevorzugen die Landwirte eine Freilandhaltung auf ihren Freiflächen. Dazu können mobile Tierställe eingesetzt werden. Durch ein Umsetzen des werden immer wieder andere Gebiete der Freiflächen genutzt und diese damit nicht übermäßig durch das Scharren der Tiere und den Kot belastet. Die Anforderungen an einen Stall für Legehennen sind in einer EU-Vorschrift festgelegt.

Es sind nun verschiedene mobile Tierställe bekannt geworden.
In der europäischen Patentschrift EP 1 119 241 B1 ist ein verfahrbarer Geflügelstall beschrieben, der auf Rädern bewegt wird und dessen Boden mit Scharrwannen ausgerüstet ist, damit die Tiere im Stall keine direkte Bodenberührung bekommen. Die Konstruktion ist aufwendig, da mit ausklappbaren Seitenteilen, die auch jeweils Scharrwannen besitzen, gearbeitet wird.

In der Gebrauchsmusterschrift DE 20 2007 010333 U1 ist ein mobiler Hühnerstall beschrieben, der auf Rädern verfahren werden kann. Sein Innenraum ist in einen Warmstall und einen darunter liegenden Scharrbereich unterteilt, zwischen den eine Kotfördereinrichtung angebracht ist. Bei einem solchen Stall wird mit viel Aufwand vermieden, dass die Tiere im Stall Bodenberührung bekommen.

In der Gebrauchsmusterschrift DE 20 2012 101 514 U1 ist ein über Räder verfahrbarer Geflügelstall beschrieben, dessen Boden durch mehrere Kotwannen gebildet wird, die mit einer aufwendigen Kotfördereinrichtung entleert werden können. Auch bei diesem Stall wird vermieden, dass die Tiere im Stall Bodenberührung bekommen.

In der Gebrauchsmusterschrift DE 20 2005 005 236 U1 ist eine mobile Weidehütte für Kühe und Pferde, also Großtiere, beschrieben, deren Wände aus Segmenten mit einer Füllung zur Wärmedämmung aufgebaut sind. Die Weidehütte ist auf Rädern verfahrbar und besitzt einen geschlossenen Boden.

In der Gebrauchsmusterschrift DE 202 15 638 U1 ist ein mobiler Hühnerstall beschrieben, der auf Kufen montiert ist und über diese versetzt werden kann. Der Hühnerstall ist mit einer zusätzlichen Voliere versehen, die mit auf den Kufen montiert ist. Die Tiere halten sich nur in dem geschützten Stallbereich und dem geschützten Volierenbereich auf. Ein Auslaufen der Hühner auf die nicht geschützte Freilandfläche soll vermieden werden. Von daher muss dieser Stall relativ groß ausgeführt sein.

Aus der US 3,009,211 A ist ein gattungsgemäßer Mobilstall offenbart, welcher als Hühnerstall oder Hundehütte verwendet werden kann und ein gebogenes, im Querschnitt halbkreisförmiges Dach aufweist, welches im Bereich gegenüberliegender Stirnseiten durch ein Fachwerk gestützt ist.

Der Erfindung liegt die Aufgabe zugrunde, einen Mobilstall, insbesondere für Geflügel, zu schaffen, der einfach in seiner Konstruktion ist, und der auch in größerer Ausführung ein Dach besitzt, das große Schneelasten verträgt.

Diese Aufgabe wird mit den Merkmalen des Anspruchs 1 gelöst.
Vorteilhafte Ausgestaltungen der Erfindung sind in den Unteransprüchen angegeben.

Der hier vorgestellte Mobilstalls ist insbesondere für Geflügel und auch Kälber oder Schweine vorgesehen. Er ist aber auch geeignet, andere Tiere unterzubringen.
Er ist dafür konzipiert, auf einer Weidefläche bei Bedarf bewegt zu werden und damit den Tieren immer wieder eine neue Weidefläche zu erschließen.
Der Mobilstall ist auf einem Grundrahmen aufgebaut, auf dem Wände stehen. Nach oben ist er durch ein Dach abgeschlossen.

Dieser Mobilstall zeichnet sich dadurch aus, dass er unter dem Grundrahmen mit Kufen ausgerüstet ist, auf denen der Mobilstall auf der Weidefläche weiter bewegbar ist. Dazu sind an den Kufen außen Ösen vorhanden, an denen eine Zugmaschine mittels eines Seils oder Kette den Mobilstall ziehen und damit versetzten kann. Durch Kufen wird die Last des Mobilstalles gleichmäßiger als mit Rädern auf der Weidefläche aufgebracht. Beim Bewegen mit einer Zugmaschine wird der Mobilstall an der Zugmaschine durch die Kraft im Seil oder Kette leicht angehoben und kann damit einfach auf den Kufen über die Weidefläche rutschen. Es sind auch relativ enge Kurven beim Versetzen möglich.
Das Bewegen oder Versetzen des Mobilstalles erfolgt spätestens dann, wenn die Weidefläche im Mobilstall mit der maximal verträglichen Kotmenge belastet ist.

Das Dach des Mobilstalls ist als Rundbogendach mit gebogenen Fachwerkträgern ausgebildet. Durch diese Konstruktion ist es möglich, einen großen stützenfreien Raum zu bilden, in denen sich die Tiere aufhalten können. Es lassen sich Spannweiten von 8 m erreichen. Die Fachwerkträger sind so ausgelegt, dass sie auch große Schneelasten tragen können.

Die Fachwerkträger sind als Parallelrundbogen ausgeführt. Dadurch wird eine besondere Tragfähigkeit und Steifigkeit des Daches erreicht. Die Rahmenecken der Fachwerkträger sind mit Querverstrebungen verstärkt und gewährleisten damit eine weitere Steifigkeit des gesamten Mobilstalles.

Die Wände des Mobilstalls sind vorteilhaft aus isolierenden Sandwichplatten aufgebaut. Da sich der Innenraum durch die Eigenwärme der Tiere temperiert, ist er auch bei kalter Witterung nutzbar.

In einer Wand des Mobilstalles ist eine Ausgangsöffnung vorgesehen, durch die die Tiere den Mobilstall verlassen und wieder hineinkommen können. So können sie sich auf der gesamten Weidefläche draußen bewegen und belasten diese damit nur wenig. Zur Nahrungsaufnahme und zum Eierlegen kommen die Tiere durch die Ausgangsöffnung in den Mobilstall zurück.

In einer Ausführungsform des Mobilstalls ist im Grundrahmen ein Rostenbereich mit einem durchlässigen Rost bedeckt ist und ein weiterer Bereich als Scharrbereich im Grundrahmen vom Rost frei gehalten. Dies ermöglicht den Tieren sich direkt auf der Weidefläche im Mobilstall zu bewegen. Dabei ist der Rost vorteilhaft im Grundrahmen so hoch über der Weidefläche angebracht, dass sich darunter nur Kot befindet und die Tiere nicht mit dem Kot in Berührung kommen. Der Scharrbereich wird zum artgerechten Scharren der Tiere genutzt.

In einer weiteren Ausführung ist in dem Mobilstall eine Voliere vorgesehen, die auf eigenständigen Kufen steht. Die Voliere ist mit dem Grundrahmen verbunden und wird mit diesem bewegt.

Konstruktive Einzelheiten vorteilhafter Ausgestaltungen des Mobilstalls, insbesondere für Geflügel, werden anhand der Figuren weiter beschrieben. Es zeigen:
Fig. 1 eine isometrische Ansicht eines Mobilstalles;
Fig. 2 einen senkrechten Querschnitt durch einen Mobilstall;
Fig. 3 einen senkrechten Querschnitt durch einen Mobilstall mit Voliere;
Fig. 4 einen waagerechten Querschnitt durch einen Mobilstall;
Fig. 5 eine Vorderansicht des Mobilstalls.

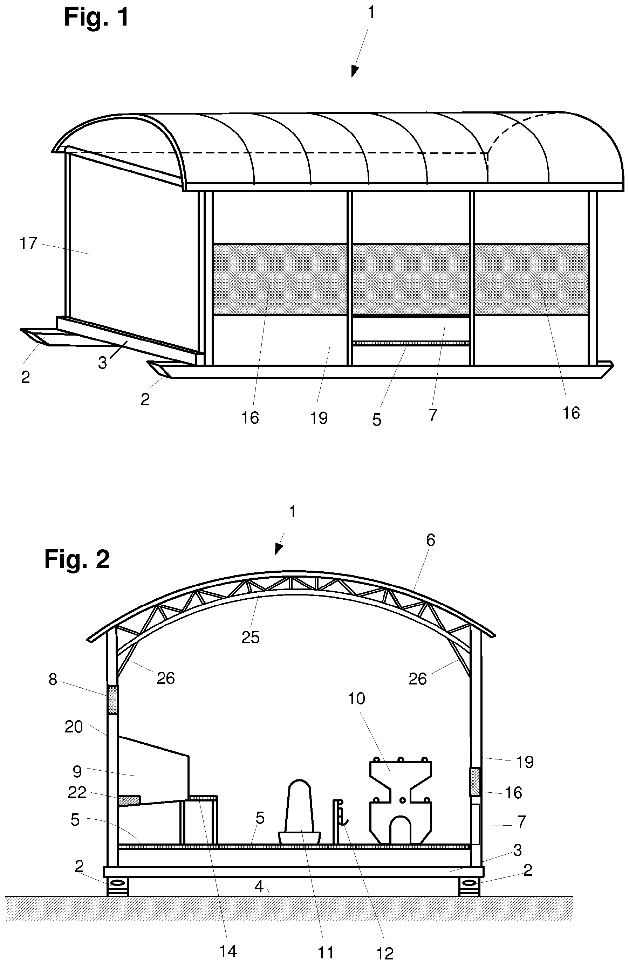

In Fig. 1 ist ein Mobilstall 1 dargestellt, dessen Grundrahmen 3 auf den Kufen 2 befestigt ist. Die Giebelwand 17 steht auf dem Grundrahmen 3. Das Dach 6 des Mobilstalles 1 ist als Rundbogendach ausgeführt. In der Seitenwand 19 befindet sich die Ausgangsöffnung 7, durch die die Tiere in den Mobilstall 1 verlassen und wieder hineinkommen können. Hier ist dargestellt, dass der Rost 5 in einer solchen Höhe angebracht ist, dass die Tiere sich auch unter diesem bewegen können.
In der Seitenwand 19 sind auch hintere Lüftungsöffnungen 16 vorhanden, die durch Planen oder ähnliches verschließbar sind.

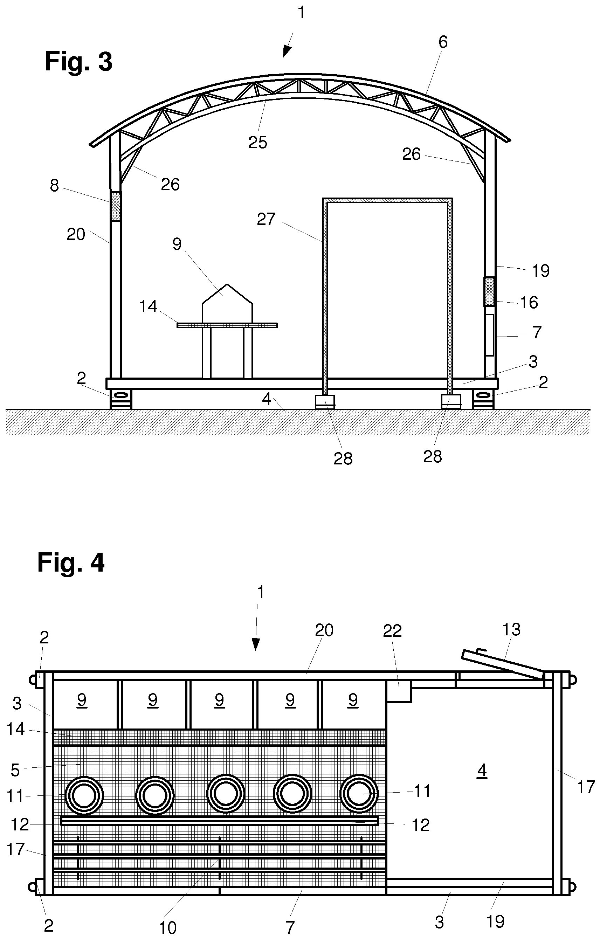

Die Fig. 2 und 3 zeigen einen vertikalen Querschnitt durch den Mobilstall 1, der mit seinem Grundrahmen 3 auf den Kufen 2 steht. Auf dem Grundrahmen 3 sind die Giebelwände 17, Vorderwand 20 und die Seitenwand 19 aufgestellt. Alle Wände sind aus isolierenden Sandwichplatten aufgebaut, damit auch im Winter die Wärme der Tiere in dem Mobilstall gehalten werden kann und eine zusätzliche Heizung nicht erforderlich ist.
Das Dach 6 schließt den Mobilstall 1 nach oben hin ab. Es ist als Rundbogendach mit gebogenen Fachwerkträgern 25 ausgeführt. Die seitlichen Rahmenenden der Fachwerkträger 25 sind mit Querverstrebungen 26 verstärkt und bieten damit eine gute Stabilität des Mobilstalles.

In der Ausführung gemäß Fig. 2 ist auf dem Rost 5 der Reuter 10 mit längs verlaufenden Rohren aufgestellt, auf den sich die Tiere setzen können. Daneben befinden sich die Tränke 12 und die Futtertöpfe 11.
An der Vorderwand 20 sind die durch eine Verschlussplane dunkel gehaltenen Legenester 9 angebracht, vor denen sich die Anflugbank 14 befindet. In den Legenestern 9 rollen die Eier zu der quer durch die Legenester 9 eingebauten Eierentnahmevorrichtung 22.

In der Ausführung gemäß Fig. 3 ist eine Voliere 27 vorgesehen, die auf eigenständigen Kufen 28 geführt ist. Die Voliere 27 ist mit dem Grundrahmen 3 verbunden und wird mit diesem mitgeführt. Weiterhin sind hier Nester 9 mit ihrem Anflugbrett 14 auf dem Grundrahmen 3 vorgesehen.

In Fig. 4 ist eine Ausführungsform des Mobilstalls dargestellt, bei der im Innenraum des Mobilstalls 1 über dem Grundrahmen 3 ist der Rost 5 angebracht ist, unter dem sich der Scharrbereich 4 auf der Weidefläche befindet. In der Seitenwand 19 befindet sich die Ausgangsöffnung 7 und die hintere Lüftungsöffnung 16. In der Vorderwand 20 sind die Tür 13 und die eine vordere Lüftungsöffnung 8 eingebaut, die mit einer Schließvorrichtung, etwa einer Klappe oder einer Plane, verschließbar ist.
Auf dem Rost 5 ist der Reuter 10 mit längs verlaufenden Rohren aufgestellt, auf den sich die Tiere setzen können. Daneben befinden sich die Tränke 12 und die Futtertöpfe 11.
An der Vorderwand 20 sind die durch eine Verschlussplane dunkel gehaltenen Legenester 9 angebracht, vor denen sich Voliere 14 befindet. In den Legenestern 9 rollen die Eier zu der quer durch die Legenester 9 eingebauten Eierentnahmevorrichtung 22.

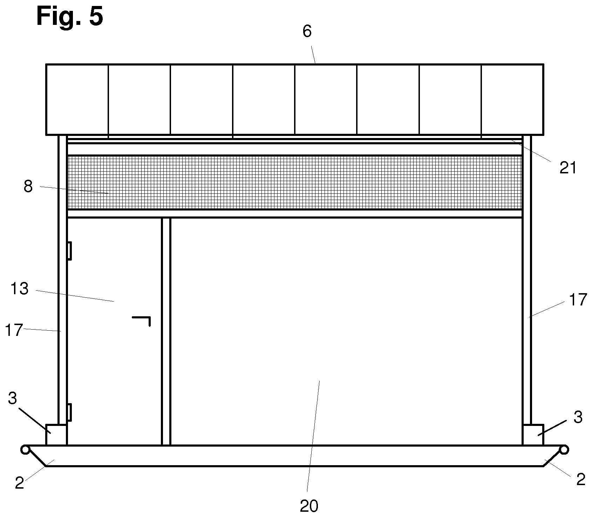

In der Vorderansicht gemäß Fig. 5 sind die Kufen 2 dargestellt, auf denen der Mobilstall bewegbar ist. Der Grundrahmen 3 trägt die Giebelwände 17, auf denen sich das Dach 6 befindet. In der Vorderwand 20 sind die Tür 13 und die vordere Lüftungsöffnung 8 eingebaut. Die über die Schließvorrichtung 21 verschließbar ist.
Da das Dach 6 mit einem Dachüberstand versehen ist, kann auch Schlagregen nicht so leicht in den Mobilstall eindringen.

### Bezugszeichen

- 1: Mobilstall
- 2: Kufe mit Öse
- 3: Grundrahmen
- 4: Scharrbereich
- 5: Rost
- 6: Dach
- 7: Ausgangsöffnung
- 8: Vordere Lüftungsöffnung
- 9: Legenest
- 10: Reuter
- 11: Futtertopf
- 12: Tränke
- 13: Tür
- 14: Anflugbank
- 15: Rohre des Reuters
- 16: Hintere Lüftungsöffnung
- 19: Seitenwand
- 20: Vorderwand
- 21: Schließvorrichtung für die vordere Lüftungsöffnung
- 22: Eierentnahme
- 25: Fachwerkträger
- 26: Querverstrebung
- 27: Voliere
- 28: Kufen der Voliere

## Patentansprüche

1. Mobilstall, insbesondere zur Unterbringung von Geflügel, Kälbern oder Schweinen, der auf einer Weidefläche bewegbar ist, und der einen Grundrahmen (3), darauf stehende Wände (17, 19, 20) und ein Dach (6) besitzt, wobei unter dem Grundrahmen (3) Kufen (2) angebracht sind, auf denen der Mobilstall (1) auf der Weidefläche weiter bewegbar ist, und das Dach (6) als Rundbogendach mit gebogenen Fachwerkträgern (25) ausgebildet ist, **dadurch gekennzeichnet, dass** die Fachwerkträger (25) Parallelrundbogen sind und Rahmenecken der Fachwerkträger (25) mit Querverstrebungen (26) verstärkt sind .

2. Mobilstall nach Anspruch 1, **dadurch gekennzeichnet, dass**
an den Kufen (2) außen Ösen vorhanden sind, an denen eine Zugmaschine mittels eines Seils oder Kette den Mobilstall ziehen und damit versetzten kann.

3. Mobilstall nach Anspruch 1, **dadurch gekennzeichnet, dass**
die Wände (17, 19, 20) aus isolierenden Sandwichplatten aufgebaut sind.

4. Mobilstall nach Anspruch 1, **dadurch gekennzeichnet, dass**
in einer Seitenwand (19) eine Ausgangsöffnung (7) vorhanden ist, durch die die Tiere den Mobilstall verlassen und wieder hineinkommen können.

5. Mobilstall nach Anspruch 1, **dadurch gekennzeichnet, dass**
in dem Grundrahmen (3) ein Rostenbereich mit einem durchlässigen Rost (5) und ein Scharrbereich (4), der vom Rost (5) freigehalten ist, vorgesehen sind.

6. Mobilstall nach Anspruch 1, **dadurch gekennzeichnet, dass**
in ihm Volieren (27) vorhanden sind, die auf eigenen Kufen geführt sind.

7. Mobilstall nach Anspruch 6, **dadurch gekennzeichnet, dass**
neben den Volieren (27) Legenester (9) aufgestellt sind.

8. Mobilstall nach Anspruch 1, **dadurch gekennzeichnet, dass**
in dem Rostenbereich ein Reuter (10) mit Rohren aufgestellt ist.

9. Mobilstall nach Anspruch 1, **dadurch gekennzeichnet, dass**
in dem Rostenbereich Futtertöpfe (11) und Tränken (12) aufgestellt sind.

## Claims

1. Mobile stall, for accommodating poultry, calves or pigs in particular, which is displaceable on a pasture, and has a basic frame (3), walls (17, 19, 20) thereon and a roof (6), wherein below the basic frame (3) skids (2) are mounted on which the mobile stall (1) is further displaceable on the pasture, and the roof (6) is an arched roof with curved lattice girders (25), **characterised in that** the lattice girders (25) are parallel arches and the frame corners of the lattice girders (25) are reinforced by means of cross-bracing (26).

2. Mobile stall according to claim 1, **characterised in that**
lugs are provided on the outside of the skids (2) by means of which a tractor unit can tow the mobile stall using a cable or chain and can thereby displace it.

3. Mobile stall according to claim 1, **characterised in that**
the walls (17, 19, 20) are constructed of insulated sandwich board.

4. Mobile stall according to claim 1, **characterised in that**
in one side wall (19) there is an exit opening (7) via which the livestock can leave and re-enter the mobile stall.

5. Mobile stall according to claim 1, **characterised in that**
in the basic frame (3) there are a grid region with a permeable grid (5) and a scratching region (4) which is kept remote from the grid (5).

6. Mobile stall according to claim 1, **characterised in that**
cages (27) are present therein which are guided on their own skids.

7. Mobile stall according to claim 6, **characterised in that**
nesting areas (9) are positioned adjacent to the cages (27).

8. Mobile stall according to claim 1, **characterised in that**
a rack (10) with pipes is mounted in the grid region.

9. Mobile stall according to claim 1, **characterised in that**
feeding pans (11) and drinkers (12) are mounted in the grid region.

## Revendications

1. Étable mobile, notamment destinée à héberger de la volaille, des veaux ou des porcs, laquelle peut être déplacée dans un pâturage et possède un cadre de base (3), des parois (17, 19, 20) posées dessus et un toit (6), des patins (2) étant placés en dessous du cadre de base (3), sur lesquels l'étable mobile (1) peut être déplacée dans le pâturage, et le toit (6) étant réalisé comme toit bombé comprenant des supports de charpente (25) cintrés, **caractérisée en ce que** les supports de charpente (25) sont des arcs en plein cintre parallèles et **en ce que** des coins de cadre des supports de charpente (25) sont renforcés par des traverses (26).

2. Étable mobile selon la revendication 1, **caractérisée en ce**
**que** des oeillets sont présents extérieurement sur les patins (2), sur lesquels un tracteur peut tirer l'étable mobile au moyen d'un câble ou d'une chaîne et peut ainsi la déplacer.

3. Étable mobile selon la revendication 1, **caractérisée en ce**
**que** les parois (17, 19, 20) sont construites à partir de panneaux sandwich isolants.

4. Étable mobile selon la revendication 1, **caractérisée en ce**
**qu'**une ouverture de sortie (7) est présente dans une paroi latérale (19), à travers laquelle les animaux peuvent sortir de l'étable mobile et de nouveau y rentrer.

5. Étable mobile selon la revendication 1, **caractérisée en ce**
**que** dans le cadre de base (3) sont ménagées une partie en grille comprenant une grille poreuse (5) et une partie de grattage (4) qui est dégagée de la grille (5).

6. Étable mobile selon la revendication 1, **caractérisée en ce**
**que** des volières (27) y sont présentes, lesquelles sont guidées sur de propres patins.

7. Étable mobile selon la revendication 6, **caractérisée en ce**
**que**, outre les volières (27), des nids (9) sont mis en place.

8. Étable mobile selon la revendication 1, **caractérisée en ce**
**qu'**un siccateur à foin (10) muni de tubes est mis en place dans la partie en grille.

9. Étable mobile selon la revendication 1, **caractérisée en ce**
**que** des mangeoires (11) et des abreuvoirs (12) sont mis en place dans la partie en grille.
